# EUROPÄISCHE PATENTSCHRIFT

(11) **EP 1 279 909 B1**
(45) Veröffentlichungstag und Bekanntmachung des Hinweises auf die Patenterteilung: **13.08.2008**
(21) Anmeldenummer: 02016163.4
(22) Anmeldetag: 20.07.2002
(51) Int. Cl.: F25B 30/04, F25B 17/08

(54) **Adsorptionswärmepumpe**
Adsorption heat pump
Pompe à chaleur à adsorption

(30) Priorität: 25.07.2001 DE 10136894; 01.08.2001 DE 10137729; 16.08.2001 AT 12842001
(43) Veröffentlichungstag der Anmeldung: 29.01.2003
(73) Patentinhaber: Vaillant GmbH, 42859 Remscheid (DE)
(72) Erfinder: Heim, Johann-Ludwig, 42857 Remscheid (DE); Hocker, Thomas, Dr., 42857 Remscheid (DE); Lang, Rainer, Dr., 51067 Köln (DE); Marth, Frank, 56581 Melsbach (DE); Marx, Uwe, 51375 Leverkusen (DE); Prescha, Ralph, 42659 Solingen (DE); Wienen, Johann, 46359 Heiden (DE)
(74) Vertreter: Hocker, Thomas

(56) Entgegenhaltungen:
- EP-A- 1 108 964
- DE-A- 3 304 014
- DE-A- 3 601 046
- DE-A- 10 038 636
- DE-A- 10 038 637
- DE-U- 29 710 273

## Beschreibung

Die vorliegende Erfindung bezieht sich auf eine Adsorptionswärmepumpe.

Aus der DE 100 24 729, DE 100 38 636 und DE 100 38 637 bekannte Adsorptionswärmepumpen besitzen einen Primärkreislauf, in dem ein von einem Brenner beheizter Primärwärmetauscher, mindestens ein Desorber-Zeolith-Modul, ein Auskoppelwärmetauscher, eine Pumpe und mindestens ein Adsorber-Zeolith-Modul in einem Ring in Serie geschaltet sind. Das oder die Desorber-Zeolith-Module sind Teil eines Sekundärkreislaufs, in dem sie mit einer Pumpe und einem Verbraucherwärmetauscher in Serie liegen. Das oder die Adsorber-Zeolith-Module sind Teil eines Umweltwärmekreislaufs, in dem sie zusammen mit einer Pumpe und einem Umweltwärmetauscher in Serie liegen. Ein Verbraucherkreislauf ist mit einem Verbraucher, hier einer Heizungsanlage und/oder einem Brauchwasserspeicher, einer Pumpe, dem Verbraucherwärmetauscher und dem Auskoppelwärmetauscher in Serie liegend. Zum Brenner führt ein Zuluftweg und eine Gasleitung, vom Primärwärmetauscher weg eine Abgasleitung. Aus der EP 1 108 964 A2 ist bekannt, dass in der Abgasleitung Kondensationswärmetauscher zur Übertragung von Energie auf den Umweltwärmekreislauf oder den Verbraucherkreislauf möglich sind. Die DE 33 04 014 A1 befaßt sich unter anderem mit der Regelung von Umweltwärmekreistäufen. Aus der DE 36 01 046 A1 und DE 297 10 273 U1 ist bekannt, dass bei konventionellen Heizgeräten Wärme vom Abgas auf die Frischluft des Brenners des Heizgerätes übertragen werden kann.

Beim Betrieb solcher Wärmepumpen hat sich herausgestellt, daß die Abgase des Brenners nach Verlassen des Primärwärmetauschers noch ungenutzte Wärme enthalten, so dass der vorliegenden Erfindung die Aufgabe zugrunde liegt, den Wärmeinhalt der den Primärwärmetauscher verlassenden Abgase weiter auszunutzen.

Die Lösung dieser Aufgabe erfolgt alternativ gemäß den kennzeichnenden Merkmalen von Anspruch 1.

Je nach dem Temperaturniveau, auf dem die Abgase, die Zuluft zum Brenner oder die Umweltwärme sich befinden, erfolgt die Einkoppelung dieser Abgasrestwärme in die vom Temperaturniveau her geeignetste Stelle.

Gemäß Anspruch 1 kann die Wärme auf eine Zuluftleitung zum Brenner übertragen werden. Eine Wärmeübertragung auf die Zuluft des Brenners ist vor allem bei niedrigen Lufttemperaturen energetisch sinnvoll und kann beispielsweise durch ein koaxiales Frischluft-Abgas-Rohr sehr einfach realisiert werden. Bei einem koaxialen Frischluft-Abgas-Rohr wird üblicherweise in einem inneren Rohr das Abgas geführt, während in einem umgebenden Rohr die Frischluft im Gegenstrom geführt wird.

Die Übertragung auf den Umweltwärmekreislauf ist dann vorteilhaft, wenn die Umweltwärmequelle derartig kalt ist, dass keine Umweltwärme in den Kreislauf eingebracht werden kann.

Gemäß den zusätzlichen Markmalen des Anspruchs 2 kann zusätzlich zur Energie aus der Abkühlung des Abgases auch Kondensationsenthalpie genutzt werden.

Gemäß den Merkmalen des Anspruchs 3 werden vor allem bei niedrigen Lufttemperaturen Abgasverluste wirkungsvoll minimiert.

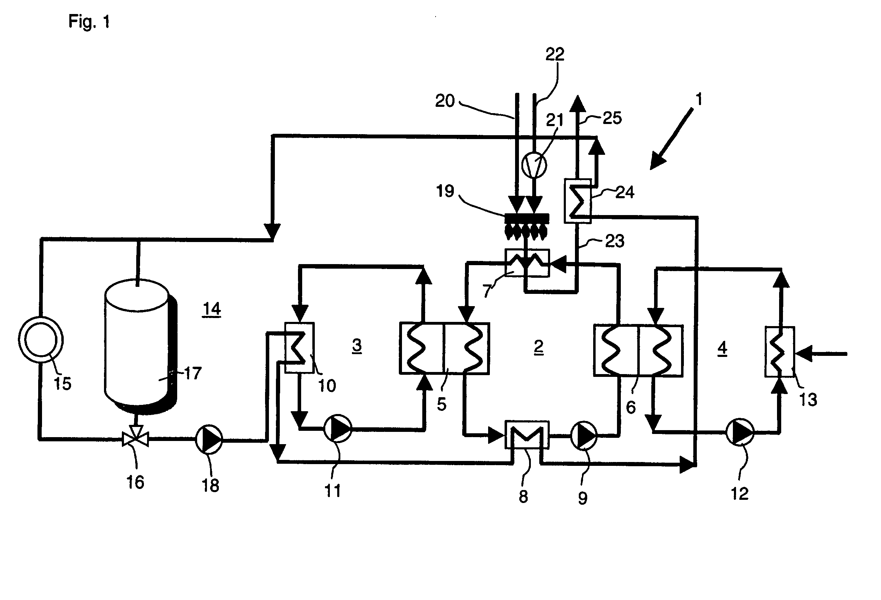

Das Ausführungsbeispiel, das in Figur 1 gezeigt ist, und in den entsprechenden Teilen des Beschreibung beschrieben ist, fällt nicht unter den Schutzbereich der Ansprüche.

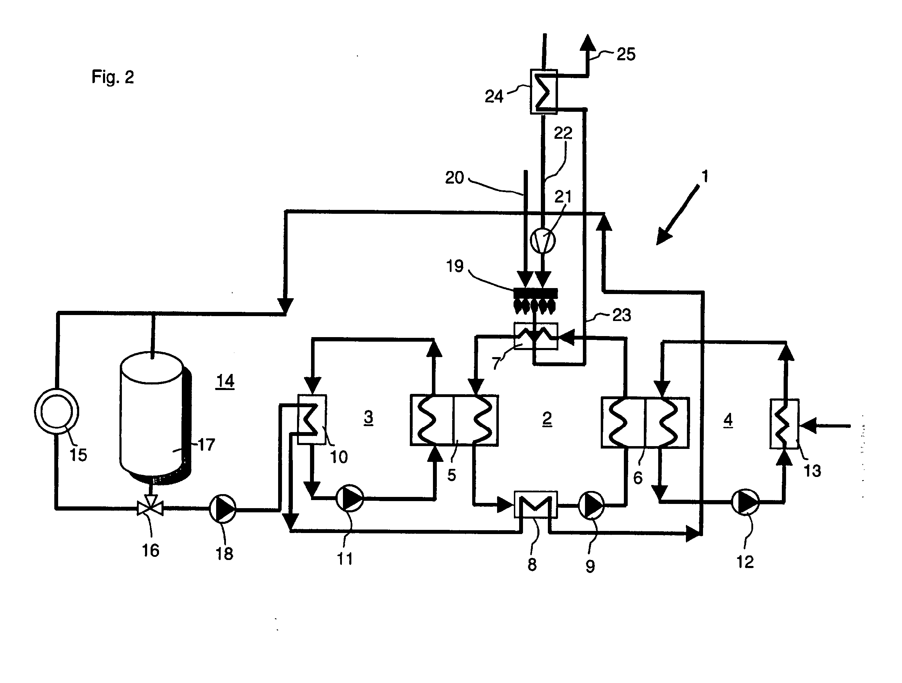

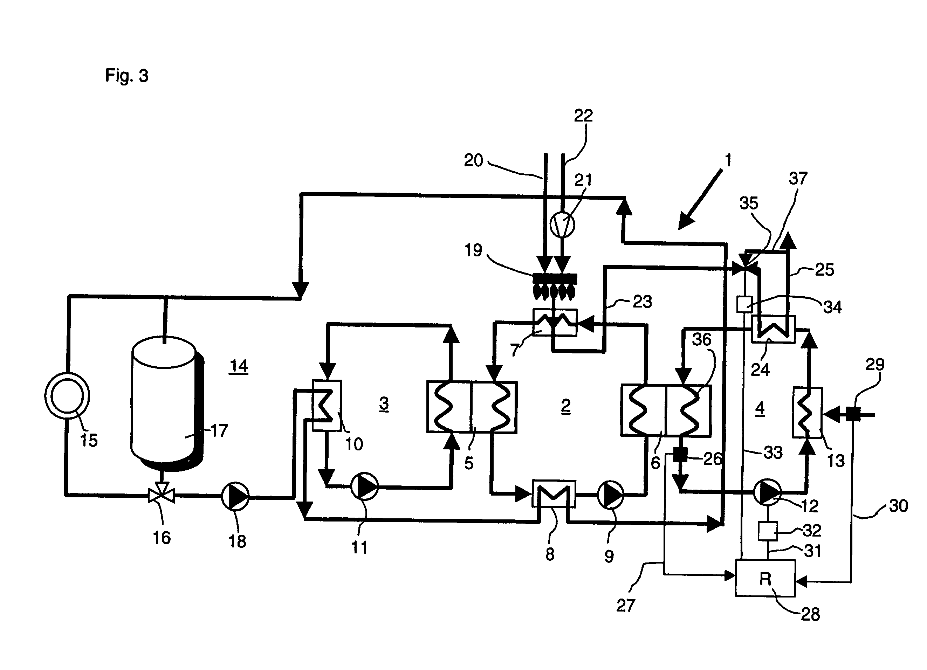

Drei Ausführungsbeispiele der Erfindung werden nachfolgend anhand der Figuren 2 und 3 der Zeichnung näher erläutert, die ein Prinzipschaltbild einer Adsorptionswärmepumpe zeigt.

In allen drei Figuren bedeuten gleiche Bezugszeichen jeweils die gleichen Einzelheiten.

Eine Adsorptionswärmepumpe 1 gemäß Figur 1 weist einen Primärkreislauf 2, einen Sekundärkreislauf 3 und einen Umweltwärmekreislauf 4 auf, die allesamt über ein Desorber-Zeolith-Modul 5 und ein Adsorber-Zeolith-Modul 6 thermisch in Verbindung stehen. Der Primärkreislauf 2 weist in Serie miteinanderliegend einen Primärwärmetauscher 7, das Desorber-Zeolith-Modul 5, einen Auskoppelwärmetauscher 8, eine Pumpe 9, das Adsorber-Zeolith-Modul 6 auf. Der Sekundärkreislauf 3 weist in Serie miteinanderliegend einen Verbraucherwärmetauscher 10, eine Pumpe 11 und das Desorber-Zeolith-Modul 5 auf. Im Umweltwärmekreislauf 4 liegt das Adsorber-Zeolith-Modul 6 in Serie mit einer Pumpe 12 und einem Umweltwärmetauscher 13.

In einem Verbraucherkreislauf 14 ist ein Verbraucher, bestehend aus einer Heizungsanlage mit diversen Heizkörpern 15 und einem hierzu über ein Umschaltventil 16 parallel geschalteten Brauchwasserspeicher 17, über eine Pumpe 18 mit dem Verbraucherwärmetauscher 10 und dem Auskoppelwärmetauscher 8 in Serie geschaltet.

Der Primärwärmetauscher 7 ist von einem Gasbrenner 19 beheizt, der von einer Erdgasleitung 20 und einer mit einem Gebläse 21 versehenen Luftleitung 22 gespeist ist. Dem Primärwärmetauscher 7 nachgeschaltet ist eine Abgasleitung 23, die unter Zwischenschaltung eines Abgaswärmetauschers 24 zu einem Abgasauslaß 25 führt. Wesentlich ist, daß der Abgaswärmetauscher 24 in den Verbraucherkreislauf 14 eingeschaltet ist, und zwar stromab des Auskoppelwärmetauschers 8. Dies ist dann sinnvoll, wenn die in der Abgasleitung 23 zur Verfügung stehende Wärme des Abgasstroms in ihrer Temperatur höher ist, als die Temperatur des Verbraucherkreislaufstroms stromab des Abkoppelwärmetauscher 8.

Beim Ausführungsbeispiel der Figur 2 ist der Abgaswärmetauscher 24 verlegt, er liegt zwar nach wie vor im Abgasweg unverändert, ist aber in die Luftleitung 22 eingeschaltet, wärmt also die dem Brenner zugeführte Luft vor. Das ist dann sinnvoll, wenn die Temperatur des Abgases in der Abgasleitung 23 so gering ist, daß sie den Verbraucherkreislauf stromab des Auskoppelwärmetauschers 8 nicht mehr nennenswert aufheizen kann.

Beim Ausführungsbeispiel gemäß Figur 3 liegt der Abgaswärmetauscher im Umweltwärmekreislauf 4, und zwar zwischen Umweltwärmetauscher 13 und Adsorber-Zeolith-Modul 6. Dies ist dann sinnvoll, wenn die Temperatur des Abgases in der Abgasleitung 23 niedriger ist als die Temperatur des Verbraucherkreislaufstromes des Auskoppelwärmetauschers 8 - da ansonsten eine Ausführungsform gemäß Fig. 1 sinnvoller ist - und höher als die Temperatur des Umweltwärmekreislaufs stromab des Umweltwärmetauschers 13 ist.

Damit nicht das Temperaturniveau im Umweltwärmekreislauf durch den Abgaswärmetauscher 24 soweit angehoben wird, daß keine Wärme mehr über den Umweltwärmetauscher 13 in den Umweltwärmekreislauf 4 eingekoppelt werden kann, sind folgende Mittel vorgesehen: In der ersten Alternative ist dem Umweltwärmekreislauf 4 stromab des Verdampfers 36 im Adsorber-Zeolith-Modul 6 ein Temperaturfühler 26 angeordnet, der über eine Leitung 27 auf einen Regler 28 geschaltet ist. Weiterhin ist der Umweltwärmequelle ein Temperaturfühler 29 zugeordnet, der über eine Leitung 30 gleichfalls auf den Regler 28 geschaltet ist. Weitere Temperatursensoren, die mit dem Regler 28 verbunden werden, in der Abgasleitung 23 des Brenners 19 vor dem Abgaswärmetauscher 24 und im Umweltwärmekreislauf 4 ebenfalls vor dem Abgaswärmetauscher 24 sind möglich und zugleich sinnvoll.

Es besteht nun die Möglichkeit, an zwei Stellen per Stellglieder in den Umweltwärmekreislauf 4 einzugreifen. Ein Weg ist über eine Leitung 31 auf einen Antriebsmotor 32 der Pumpe 12 gegeben. Durch die Variation des Volumenstroms wird das Temperaturniveau beeinflußt. So kann bei hoher Umwelttemperatur und hohem Volumenstrom die Temperatur des Umweltwärmekreislauf 4 stromab des Umweltwärmetauschers 13 derartig niedrig gehalten werden, dass auch im Abgaswärmetauscher 24 noch Wärme auf den Umweltwärmekreislauf 4 übertragen werden kann.

Eine zweite Möglichkeit sieht vor, über eine Leitung 33 auf einen Motor 34 einer Umstellklappe 35, die in der Abgasleitung 23 stromauf des Abgaswärmetauschers 24 liegt, einzugreifen. Liegt das vom Temperaturfühler 29 geführte Temperaturniveau gleich oder niedriger als das vom Temperaturfühler 26 gefühlte, so kann von der Umweltwärmequelle keine Wärme in den Umweltwärmekreislauf 4 eingebracht werden. In diesem Fall kann jedoch Wärme aus dem Abgas des Brenners 19 über den Abgaswärmetauscher 24 in den Umweltwärmekreislauf 4 eingebracht werden. Ist jedoch die Temperatur des Abgases niedriger als die Temperatur der Sole im Umweltwärmekreislauf 4 vor dem Abgaswärmetauscher 24, so wird vom Regler 28 der Motor 34 der Umstellklappe 35 so gestellt, daß unter Umgehung des Abgaswärmetauschers 24 das Abgas direkt in den Parallelstutzen 37 gelangt. Dann kann zur Ausnutzung der restlichen Abgasenergie ein Abgaswärmetauscher 24 gemäß den Ausführungsbeispielen nach den Fig. 1 und 2 geschaltet sein.

Nicht dargestellt ist eine weitere Form der Ausnutzung der Restwärme des Abgases des Brenners 19. In diesem Fall wird das Abgas stromab des Primärwärmetauschers 7 in einen Gas-Gas-Gegenstomwärmetauscher geleitet. Auf der anderen Seite des Gas-Gas-Gegenstomwärmetauscher wird Frischluft in zu beheizende Räume geleitet. Hierdurch wird eine Luftheizung realisiert. Dies ist dann sinnvoll, wenn die Außentemperatur niedriger als die Raumtemperatur ist. So kann im Winter besonders viel Abgasenthalpie zurück gewonnen werden.

## Patentansprüche

1. Adsorptionswärmepumpe (1) mit einem von einem Brenner (19) beheizten Primärwärmetauscher (7), mindestens zwei als Adsorber (5) und Desorber (6) geschalteten Wärmetauschern und einem Auskoppelwärmetauscher (8), die alle zusammen mit einer Pumpe (9) in einem Primärkreislauf (2) liegen, wobei der Auskoppelwärmetauscher (8) in einem Verbraucherkreis (14) eingeschaltet ist, **dadurch gekennzeichnet, dass** dem Primärwärmetauscher (7) ein Abgaswärmetauscher (24), der
als Gas-Gas-Gegenstomwärmetauscher Abgasenthalpie zum Erwärmen von Frischluft einer Luftheizung verwendet,
und der mit einer Zuluftleitung (22) zum Brenner (19) verbunden ist, und/oder der mit einem Umweltwärmekreislauf (4), verbunden ist in dem er dem Verdampfer (36) im Adsorber-Modul (6) vorgeschaltet ist, wobei in diesem Fall die Adsorptionswärmepumpe über einen Regler (28) und einen einer Umweltwärmequelle (13) zugeordneten Temperaturfühler (29) verfügt, wobei der Regler als Stellglied einen Motor (32) einer im Umweltwärmekreislauf (4) angeordneten Pumpe (12) in Abhängigkeit der Temperatur des Temperaturfühlers (29) ansteuert oder eine Umstellklappe (35) in der Abgasleitung (23) vorhanden ist, deren Ausgänge einerseits zum Abgaswärmetauscher (24) und andererseits zum den Abgaswärmetauscher (24) überbrückenden Parallelstutzen (37) führt und der Regler (28) als Stellglied auf einen Motor (34) der Umstellklappe geschaltet ist,
und wobei dem Primärwärmtaustauscher (7) der Abgaswär=metauschen in einer Abgasleitung (23) des Brenners (19) nachgeschaltet ist.

2. Adsorptionswärmepumpe (1) nach einem der Ansprüche 1, **dadurch gekennzeichnet, dass** der Abgaswärmetauscher (24) ein Kondensationswärmetauscher ist.

3. Adsorptionswärmepumpe nach Anspruch 1 oder 2, **dadurch gekennzeichnet, dass** das Abgas stromab des Primärwärmeaustauschers (7) und die Zuluft zum Brenner (19) zumindest streckenweise in einem koaxialen Frischluft-Abgas-Rohr geführt werden.

## Claims

1. An adsorption heat pump (1) with a primary heat exchanger (7) heated by a burner (19), at least two heat exchangers switched as an adsorber (5) and desorber (6), respectively, and a decoupling heat exchanger (8), all of which plus a pump (9) being arranged in a primary circuit (2), with the decoupling heat exchanger (8) being arranged in a consumer circuit (14), **characterised in that** the primary heat exchanger (7) is arranged downstream of a waste gas heat exchanger (24) which latter is a gas/gas counter current heat exchanger using waste gas enthalpy for heating the fresh air of an air heating arrangement and being connected with a air supply line (22) to the burner (19), and/or which is connected with an ambient heat circuit (4) in which it is series connected with, and provided upstream of, the evaporator (36) in the adsorber module (6), in which case the adsorption heat pump (1) is provided with a controller (28) and a temperature sensor (29) associated with an ambient heat source (13), with the controller (28) acting as an actuator and, dependent on the temperature of the temperature sensor (29), controlling an electric motor (32) of a pump (12) arranged in the ambient heat circuit (4), or provision is made in the waste gas line (23) of a changeover flap (35) whose outlets on the one hand lead to the waste gas heat exchanger (24) and on the other hand to the parallel outlet (37) bypassing such waste gas heat exchanger (24), with the controller (28) acting as an actuator on an electric motor (34) for the changeover flap, with the waste gas heat exchanger (24) being connected in series with, and arranged downstream of, the primary heat exchanger (7) in a waste gas line (23) of the burner (19).

2. An adsorption heat pump (1) as claimed in Claim 1 **characterised in that** the waste gas heat exchanger (24) is a condensation heat exchanger.

3. An adsorption heat pump (1) as claimed in Claim 1 or Claim 2 **characterised in that** the waste gas downstream of the primary heat exchanger (7) and the air supplied to the burner (19) are at least for a certain length conducted in a coaxial fresh air/waste gas pipe.

## Revendications

1. Pompe de chaleur à adsorption (1) dotée d'un échangeur de chaleur primaire (7) chauffé par un brûleur (19), d'au moins deux échangeurs de chaleur montés sous forme d'adsorbant (5) et de désorbant (6) et d'un échangeur de chaleur à découplage (8), positionnés ensemble conjointement à une pompe (9) dans un circuit primaire (2), l'échangeur de chaleur à découplage (8) étant relié à un circuit récepteur (14), **caractérisée en ce que** l'échangeur de chaleur primaire (7) est positionné avant un échangeur de chaleur sur gaz d'échappement (24), utilisant sous forme d'échangeur de chaleur gaz-gaz à contre-courant l'enthalpie des gaz d'échappement afin de réchauffer l'air frais d'un chauffage par air, et relié au brûleur (19) par un tuyau d'arrivée d'air (22), et / ou relié à un circuit de chaleur ambiante (4) dans lequel il est positionné avant l'évaporateur (36) du module adsorbant (6), la pompe de chaleur à adsorption disposant dans ce cas d'un régulateur (28) et d'un capteur de température (29) relié à une source de chaleur ambiante (13), le régulateur agissant comme actionneur de commande du moteur (32) d'une pompe (12) positionnée dans un circuit de chaleur ambiante (4), en fonction de la température du capteur de température (29), ou une valve d'ajustement (35) étant présente dans le tuyau des gaz d'échappement (23), dont les sorties conduisent d'une part à l'échangeur de chaleur sur gaz d'échappement (24) et d'autre part aux renforts parallèles (37) qui pontent l'échangeur de chaleur sur gaz d'échappement (24), et le régulateur (28) agissant comme actionneur étant relié à un moteur (34) de la valve d'ajustement, l'échangeur de chaleur sur gaz d'échappement étant positionné après l'échangeur de chaleur primaire (7) dans un tuyau des gaz d'échappement (23) du brûleur (19).

2. Pompe de chaleur à adsorption (1) selon la revendication 1, **caractérisée en ce que** l'échangeur de chaleur sur gaz d'échappement (24) est un échangeur de chaleur à condensation.

3. Pompe de chaleur à adsorption selon la revendication 1 ou 2, **caractérisée en ce que** les gaz d'échappement sont conduits dans le sens descendant de l'échangeur de chaleur primaire (7) et l'arrivée d'air vers le brûleur (19) est amenée au moins en certains endroits via un conduit coaxial d'échappement de l'air frais.
